**Europäisches Patentamt**

**European Patent Office**

**Office européen des brevets**

(19)

(11) Veröffentlichungsnummer : **0 044 058**
**B1**

(12) **EUROPÄISCHE PATENTSCHRIFT**

(45) Veröffentlichungstag der Patentschrift :
29.02.84

(51) Int. Cl.³ : **C 02 F 1/52**, C 02 F 1/28,
**D 21 F 1/82**

(21) Anmeldenummer : 81105422.0

(22) Anmeldetag : 11.07.81

(54) **Mittel und Verfahren zur Behandlung von Fabrikationskreislauf- und Abwässern der papiererzeugenden und verwandter Industrien.**

(30) Priorität : 11.07.80 DE 3026403

(43) Veröffentlichungstag der Anmeldung :
20.01.82 Patentblatt 82/03

(45) Bekanntmachung des Hinweises auf die Patenterteilung : 29.02.84 Patentblatt 84/09

(84) Benannte Vertragsstaaten :
AT BE CH DE FR GB IT LI NL SE

(56) Entgegenhaltungen :
EP-A- 0 000 129
EP-A- 0 000 130
DE-A- 2 300 305
DE-A- 2 436 498
DE-C- 258 152
FR-A- 2 169 835
FR-A- 2 280 414
FR-A- 2 359 076
GB-A- 1 484 671
US-A- 3 944 687

(73) Patentinhaber : **SÜD-CHEMIE AG**
**Lenbachplatz 6**
**D-8000 München 2 (DE)**

(72) Erfinder : **Möbius, Christian, Dipl.-Chem. Dr.**
**Ringhofferstrasse 72**
**D-8044 Unterschleissheim (DE)**
Erfinder : **Weigl, Josef**
**Bauseweinallee 86**
**D-8000 München 60 (DE)**

(74) Vertreter : **Reitzner, Bruno, Dr.**
**Patentanwälte Dipl.-Ing. R. Splanemann Dr. B.**
**Reitzner Tal 13**
**D-8000 München 2 (DE)**

## Mittel und Verfahren zur Behandlung von Fabrikationskreislauf- und Abwässern der papiererzeugenden und verwandter Industrien

Die Erfindung betrifft ein Verfahren zur Behandlung von Fabrikationskreislauf- und Abwässern der papiererzeugenden und verwandter Industrien zwecks Entfernung von gelösten oder kolloidal dispergierten organischen Stoffen.

Die Behandlung von Papierfabrikswasserkreisläufen erfolgt heute praktisch ausschließlich mit Sedimentations-, Flotations- oder Filtrationsstoffängern, teilweise unter Einsatz chemischer Flockungshilfmittel.

Unter dem Aspekt außerordentlich gestiegener Kosten für die Abwasserreinigung und der nicht zuletzt deshalb angestrebten weitgehenden Kreislaufschließung — d. h. Verringerung der spezifischen Abwassermenge — ist diese Verfahrensweise überholt. Reinigungsmöglichkeiten, die hisher für den Abwasserbereich diskutiert wurden, sind ins Kreislaufwasser vorzuverlegen, um dadurch eine weitere Einengung der Wasserkreisläufe zu ermöglichen und gleichzeitig eine geringere Belastung des Restabwassers zu erreichen.

Eines der größten Hindernisse für eine weitere Schließung der Wasserkreisläufe in der Papierindustrie ist die Anreicherung gelöster oder kolloidal dispergierter organischer Stoffe im Kreislaufwasser, die überwiegend anionischer Natur sind und erhebliche Produktionsstörungen und Einbußen an der Produktqualität bedingen. Diese Stoffe sollten daher so weit wie möglich aus dem Kreislaufwasser entfernt werden, um eine vollständige Schließung des Wasserkreislaufes auch in Fällen durchzuführen, in denen dies heute noch für ausgeschlossen gehalten wird. Das zweite dabei auftretende Problem, die Anreicherung der Elektrolyte, ist auf ein reines Werkstoffproblem zu reduzieren, da inzwischen nachgewiesen wurde, daß eine nennenswerte Beeinflussung der Produktion und der Produktqualität durch die anorganischen Elektrolyte nicht erfolgt.

Für die Behandlung der Papierfabrikswasserkreisläufe wurden bereits feste, pulverförmige Adsorptionsmittel verwendet. Beispielsweise ist für den Zusatz zum Stoff der Einsatz alkalisch aktivierter Bentonite aus « Wochenblatt für Papierfabrikation », 105, 799-802 (1977) bekannt. Alkalisch aktivierte Bentonite können jedoch bei der Behandlung von Kreislaufwasser lediglich in Suspensionsform dem Wasser zugefügt werden und müssen in zusätzlichen Aggregaten durch Sedimentation oder Flotation abgetrennt werden. Eine direkte Filtrationsbehandlung ist wegen der besonderen Eigenschaften der alkalisch aktivierten Bentonite nicht möglich.

Aus der DE-B 21 21 198 ist ferner ein Verfahren zur Rückgewinnung von Faserstoffen und Füllstoffen aus in der Papierindustrie anfallenden Abwässern bekannt, bei dem den Abwässern ein Gemisch aus (a) gequollenen, in üblicher Weise in Na-, K-, $NH_4$- und/oder H-Form umgewandelten Schichtsilikaten und (b) mit den Schichtsilikaten und gegebenenfalls mit den Faser- und Füllstoffen in Reaktion tretenden wasserlöslichen makromolekularen Verbindungen von Fadenmolekülstruktur in einer zur Bildung von Totalflocken ausreichenden Menge zugesetzt wird und daß die gebildete Schlammphase nach erfolgter Abtrennung in den Papierherstellungsprozeß zurückgegeben wird. Diese Literaturstelle zielt also darauf ab, feste, ungelöste Stoffe aus den Abwässern durch Flockung und anschließende Filtration zu entfernen, während erfindungsgemäß vor allem gelöste oder kolloidal dispergierte organische Stoffe aus Produktionsabwässern durch Adsorption entfernt werden sollen. Bei den bekannten Verfahren ist die Verwendung der makromolekularen Verbindungen von Fadenmolekülstruktur wesentlich, da ohne diese keine Rückgewinnung von Faser- und Füllstoffen durch Flockung möglich ist. Das gegebenenfalls in die H-Form umgewandelte Schichtsilikat liegt in einer gequollenen Form vor, d. h. die Schichtstruktur ist durch die erfolgte milde Säurebehandlung noch weitgehend erhalten. Insbesondere enthält das Schichtgitter noch praktisch den gesamten Aluminiumanteil. Die erhaltene Schlammphase ist durch die makromolekularen Verbindungen von Fadenmolekülstrukturen verunreinigt und eignet sich nur zum Füllen von Papier oder Pappe minderer Qualität. Ferner enthält das von der Schlammphase z. B. durch Filtration abgetrennte Abwasser noch die meisten gelösten bzw. kolloidal dispergierten organischen Störstoffe und kann aus diesem Grund nicht mehr als Kreislaufwasser verwendet werden.

Es ist ferner aus J. Weigl, « Elektrokinetische Grenzflächengänge », Weinheim, New York : Verlag-Chemie 1977, 156-157 bekannt, daß ein spezieller Asbesttyp (Chrysotil-Asbest mit hoher spezifischer Oberfläche und positivem Zetapotential) gewisse Adsorptionseigenschaften für anionische organische Farbstoffe aufweist.

Ebenfalls als gutes Adsorptionsmittel für anionische organische Stoffe ist positiv geladenes Aluminiumoxid bekannt. In einem großtechnisch angewendeten Verfahren wird dieses Material in gekörnter Form in Adsorptionstürmen eingesetzt, wobei das beladene Adsorbens thermisch regeneriert wird (vgl. Prog. Wat. Tech. 10, 1978, 89-96).

Aus den genannten Literaturstellen kann der Schluß gezogen werden, daß Adsorptionsmittel mit hoher spezifischer Oberfläche und positivem Zetapotential auch für die Behandlung der Kreislaufwässer der Papiererzeugung geeignet sein sollten.

Es wurde jedoch festgestellt, daß die genannten Adsorptionsmittel unter praktischen Bedingungen bei der Behandlung von Fabrikationskreislauf- und Abwässern der papiererzeugenden und verwandter Industrien nur unbefriedigende Adsorptionsergebnisse lieferten, obwohl sie sich in Modellversuchen zunächst als brauchbar erwiesen hatten Überraschenderweise wurde festgestellt, daß sauer aktivierte Tonminerale, die im allgemeinen ein negatives Zetapotential haben, in der Praxis deutlich bessere Adsorptionsergebnisse liefern.

Gegenstand der Erfindung ist somit ein Verfahren zur Behandlung von Fabrikationskreislauf- und Abwässern der papiererzeugenden und verwandter Industrien zwecks Entfernung von gelösten oder kolloidal dispergierten organischen Stoffen, das dadurch gekennzeichnet ist, daß man ein sauer aktiviertes Tonmineral einsetzt, dessen Alkali- bzw. Erdalkalianteil praktisch vollständig und dessen Aluminiumanteil zum großen Teil aus dem Mineral herausgelöst sind.

Sauer aktivierte Tonminerale sind an sich als Adsorptionsmittel bekannt. Die Tonmineral gehören verschiedenen Strukturtypen an. Tonminerale vom Strukturtyp des Kaolinits sind beispielsweise Kaolinit, Nakrit, Dickit, Anauxit und Halloysit, sowie die Magnesium-, Aluminium- und Eisensilicate mit Chlorit- bzw. Kaolinit-Struktur. Ein weiterer Strukturtyp umfaßt die glimmerähnlichen Tonminerale, wie Hydrophyllit, Vermiculit, Hydrobiotit, Glaukonit und Illit. Besonders wichtig für den vorliegenden Zweck sind die dioktaedrischen Montmorin-Minerale, wie Montmorillonit, Beidellit und Nontronit, die trioktaedrischen Montmorin-Minerale, wie Hectorit, Saponit und Saukonit, sowie die Tonminerale mit Faserstruktur, wie Attapulgit und Sepiolit. Eine allgemeine Zusammenfassung dieser Tonminerale findet sich in « Die silicatischen Tonminerale » von Dr. K. Jasmund, Verlag Chemie GmbH, Weinheim/Bergstr., 1955, Seite 40-177. Die saure Aktivierung dieser Tonminerale erfolgt im allgemeinen durch Behandlung mit Mineralsäuren, wie Salz- oder Schwefelsäure, wobei der Alkali- bzw. Erdalkalianteil praktisch vollständig sowie ein großer Teil, vorzugsweise mindestens 20 Gew.-% des in der Oktaederschicht des Minerals befindlichen Aluminium- und Eisenanteils herausgelöst werden. Es hinterbleibt ein überwiegend aus $SiO_2$ bestehendes Produkt mit einer hohen spezifischen Oberfläche von mindestens 180 $m^2/g$, vorzugsweise 240 bis 360 $m^2/g$, einem deutlich negativen Zetapotential und einer hohen Oberflächenenergie. Dieses Produkt hat einen Großteil der speziellen Eigenschaften des als Ausgangsprodukt eingesetzten Tonminerals verloren. Die Kieselsäure im Produkt besteht zu einem großen Anteil an freier in schwacher Alkalilösung löslicher Kieselsäure. Das Produkt hat ein Mikroporenvolumen ($< 800$ Å) von mindestens 0,3 ml/g.

Die besonders gute Wirkung der sauer aktivierten Tonminerale bei der Behandlung von Papierfabrikationskreislaufwässern ist deshalb überraschend, weil die Eigenschaften dieser Produkte im Vergleich zu den vorher genannten eine solche Wirkung nicht erwarten ließen. Alkalisch aktivierte Bentonite besitzen aufgrund ihrer Quellfähigkeit und der sich daraus ergebenden besonderen Schichtstruktur mit der Möglichkeit der Bildung von Einlagerungsverbindungen sowie der besonderen Ladungsverteilung an den Kristallblättchen (Flächen negativ, Kanten positiv geladen) bekanntlich die Möglichkeit, in starkem Maße auch negativ geladene organische Verbindungen zu adsorbieren. Bevorzugt werden allerdings ganz eindeutig positiv geladene Verbindungen adsorbiert.

Die vorstehend genannten Produkte Chrysotil-Asbest und Aluminiumoxid zeigen bei der Behandlung von Papierfabrikationskreislaufwässern nur dann eine gute Wirkung, wenn sie bei dem jeweils vorliegenden pH-Wert im Kreislaufwasser ein positives Zetapotential aufweisen. Hier ist offenbar ein Zusammenhang zwischen der Oberflächenladung des Adsorbens und der Ladung der zu adsorbierenden organischen Stoffe gegeben.

Die erfindungsgemäß verwendeten sauer aktivierten Tonminerale werden dagegen bei bekannten Anwendungen für die Behandlung von Pflanzenölen und Mineralölen eingesetzt, d. h. in einem rein organischen Medium, während sie in wäßrigem Medium nur zur Entfernung von Eiweißstoffen aus Getränken, vorwiegend aus Bier, eingesetzt werden, die in dem vorliegenden pH-Bereich (etwa 4,5) positiv geladen sind. Nach welchem Mechanismus dagegen die erfindungsgemäß gefundene hervorragende Adsorption vorwiegend negativ geladener organischer Stoffe aus Papierfabrikskreisläufen an der ebenfalls negativ geladenen Oberfläche der sauer aktivierten Tonminerale stattfindet, ist nicht bekannt.

Die erfindungsgemäß adsorbierten organischen Stoffe, die entweder gelöst oder kolloidal dispergiert sind, umfassen beispielsweise Lignine, synthetische Retentionshilfsmittel, Emulgatoren, Farbstoffe u. dgl.

Vorzugsweise werden sauer aktivierte Tonminerale des Montmorillonittyps eingesetzt.

Nach einer Weiterbildung des erfindungsgemäßen Verfahrens wird das bei der Behandlung des Fabrikationskreislauf oder Abwasser anfallende beladene Mittel als Füllstoff wiederverwendet. Damit bietet sich der seltene Fall einer Reinigungsmaßnahme ohne Entstehung fester Abfallstoffe, die beseitigt werden müßten.

Die Wirkung der erfindungsgemäß verwendeten Tonminerale und der Wirkungsvergleich mit den sonst für derartige Behandlungen einsetzbaren Mitteln ist in den nachstehenden Beispielen in nicht einschränkender Weise erläutert. In der nachstehend angegebenen Tabelle I sind zunächst die Eigenschaften der in den Versuchen verwendeten Mittel einander gegenübergestellt. Die erfindungsgemäß verwendeten sauer aktivierten Tonminerale A bis D hatten durchwegs einen $SiO_2$-Gehalt von etwa 66 bis 72 Gew.-%, einen $Al_2O_3$-Gehalt von etwa 12 bis 15 Gew.-% und einen Glühverlust von etwa 6 bis 10 Gew.-%. Der Rest bestand im wesentlichen aus Fe, Mg und Ca in wechselnden Mengen. Die Produkte A bis D unterscheiden sich voneinander im wesentlichen durch ihren mittleren Korndurchmesser und durch den pH-Wert. Sie wurden durch sauren Aufschluß eines Calciumbentonits aus der Moosburger Gegenderhalten, wobei die Produkte B und C bei der späteren Weiterverarbeitung neutralisiert wurden.

Bei den Vergleichssubstanzen handelt es sich durchwegs um Handelsprodukte. Der Chrysotil-Asbest ist vom Typ HPP ; die beiden Aluminiumoxid-Typen I und II unterscheiden sich in erster Linie durch ihre spezifische Oberfläche ; der alkalisch aktivierte Bentonit wird unter der Bezeichnung « Tixoton » von der Anmelderin vertrieben.

## Tabelle I

### Eigenschaften der Versuchsprodukte

| Adsorptionsmittel | spezifische Oberfläche (BET) m²/g | mittlerer Korndurchmesser μm | Zeta-Potential mV pH 5 | Zeta-Potential mV pH 7 | Porenvolumen ml Hg/g | pH-Wert der 1 proz. wäßrigen Suspension |
|---|---|---|---|---|---|---|
| sauer akt. Tonmineral A | 260 | 2,5 | − 22 | − 27 | 1,63 | 3,4 |
| sauer akt. Tonmineral B | 260 | 2,5 | − 35 | − 33 | | 7,4 |
| sauer akt. Tonmineral C | 260 | 2,5 | − 13 | − 14 | | 7,8 |
| sauer akt. Tonmineral D | 240 | 5,0 | − 32 | − 29 | | 3,5 |
| Chrysotil-Asbest | 55 | — | + 32 | + 45 | 1,76 | 9,3 |
| Aluminiumoxid I | 266 | — | + 12 | + 12 | 2,29 | 9,2 |
| Aluminiumoxid II | 117 | — | + 25 | + 20 | 0,67 | 5,1 |
| Alkalisch akt. Bentonit | 46 | * | − 20 | − 22 | 0,64 | 10,1 |

\* Siebrückstand auf 45 μm < 0,1 %
Die pH-Einstellung für die Messung der Zeta-Potentiale wurde mit NaOH und HCl durchgeführt.

Das Adsorptionsvermögen der in Tabelle I angegebenen Substanzen wurde zunächst an Ligninsulfonsäure als Modellsubstanz für anionische organische Stoffe geprüft. Im einzelnen wurde als Modellsubstanz Calciumligninsulfonat, gereinigt, mittleres Molekulargewicht etwa 10 000, verwendet. Die Adsorptionsmessungen erfolgten an Lösungen mit 50 mg Ligninsulfonat pro Liter Leitungswasser und Zusatz von 1,0 g Adsorptionsmittel je Liter Lösung. Die Einwirkzeit betrug 30 Min. ; die Abtrennung erfolgte durch Zentrifugieren. Die Ergebnisse sind in Tabelle II zusammengefaßt.

## Tabelle II

### Adsorption von Ligninsulfonat

| Adsorptionsmittel | Adsorption in %, bezogen auf die Konzentration der unbehandelten Lösung |
|---|---|
| sauer aktiviertes Tonmineral A | 5,4 |
| sauer aktiviertes Tonmineral D | 8,0 |
| Chrysotil-Asbest | 58,7 |
| Aluminiumoxid I | 44,0 |
| Aluminiumoxid II | 86,0 |
| alkalisch aktivierter Bentonit | 7,1 |

Das Ergebnis zeigt eindeutig, daß die anionische organische Substanz wirksam nur von Produkten mit einer positiven Oberflächenladung adsorbiert werden kann. Dies entspricht der Erwartung.
Wie jedoch in den nachfolgenden Beispielen gezeigt wird, verhalten sich die in der Praxis vorkommenden Fabrikationskreislaufwässer überraschenderweise anders als die Modellsubstanz Ligninsulfonat.

## Beispiel 1

In diesem Beispiel wird die Adsorption organischer Stoffe aus dem Kreislaufwasser einer Papierfabrik dargestellt, wobei der Gehalt an organischer Substanz durch den gesamten organischen Kohlenstoffgehalt TOC (Total Organic Carbon) in mg C je Liter ausgedrückt wird. Entsprechende Ergebnisse zeigen sich bei der Anwendung anderer Meßgrößen für die Verunreinigung von Wasser mit organischer Substanz, wie z. B. chemischer Sauerstoffbedarf CSB und biochemischer Sauerstoffbedarf BSB.

Die Ergebnisse der Untersuchungen sind in der Tabelle III angegeben.

Tabelle III

Adsorption organischer Stoffe aus Papierfabrikskreislaufwasser

| Adsorptionsmittel | gesamter organischer Kohlenstoffgehalt, TOC | |
| --- | --- | --- |
| | mg C/Liter | Abnahme % |
| unbehandelt | 210 | — |
| sauer aktiv. Tonmineral A | 80 | 62 |
| Chrysotil-Asbest | 180 | 14 |
| Aluminiumoxid I | 160 | 24 |
| Aluminiumoxid II | 200 | 5 |
| alkalisch aktiv. Bentonit | 140 | 13 |

Für die Messungen wurde jeweils 1 Liter Kreislaufwasser mit 10 g des zu prüfenden Adsorptionsmittels behandelt. Das Adsorptionsmittel wurde dabei stets 2 Stunden mit wenig Wasser vorgequollen, da die verwendeten Adsorptionsmittel teilweise in ihrer Wirkung abhängig vom Grad der Vorquellung sind. Nach Zugabe des vorgequollenen Adsorptionsmittels zu dem Kreislaufwasser wird 30 Minuten mit einem Flügelrührer gerührt und anschließend das Wasser über ein Glasfaserfilter abfiltriert. Die Vergleichsprobe (unbehandelt) wird ebenfalls vor der Messung über ein Glasfaserfilter filtriert.

Bei dieser Art der Behandlung wird ein großer Überschuß an Adsorptionsmittel dem Wasser zugegeben, so daß gewissermaßen die bei Durchführung einer einstufigen Behandlung maximal mögliche Adsorptionsleistung gemessen wird.

Die Ergebnisse zeigen deutlich, daß wider Erwarten das sauer aktivierte Tonmineral die beste Adsorptionswirkung ergibt.

Beispiel 2

In diesem Beispiel wurden die gleichen Untersuchungen wie in Beispiel 1 an dem Kreislaufwasser einer Anlage zur Erzeugung von Holzschliff, welcher als Faserstoff bei der Papierherstellung verwendet wird, durchgeführt. In einer solchen Anlage wird Holz unter Zusatz von reichlich Wasser zerfasert, wobei erhebliche Anteile organischer Stoffe freigesetzt werden. Da der entstehende Faserbrei je nach Technologie mit einem Feststoffgehalt zwischen 2 und 10 % in die Papiererzeugung überführt wird, gelangen erhebliche Mengen der freigesetzten organischen Stoffe in den Papiermaschinenkreislauf.

Die Behandlungen wurden analog Beispiel 1 ausgeführt. Die Ergebnisse sind in Tabelle IV wiedergegeben.

Tabelle IV

Adsorption organischer Stoffe aus Kreislaufwasser der Holzschleiferei

| Adsorptionsmittel | gesamter organischer Kohlenstoffgehalt, TOC | |
| --- | --- | --- |
| | mg C/Liter | Abnahme % |
| unbehandelt | 510 | — |
| sauer aktiv. Tonmineral A | 290 | 43 |
| Chrysotil-Asbest | 450 | 12 |
| Aluminiumoxid I | 450 | 12 |
| Aluminiumoxid II | 430 | 16 |
| alkalisch aktiv. Bentonit | 410 | 20 |

Es zeigt sich genau das gleiche Ergebnis wie bei der Behandlung von Papiermaschinenkreislaufwasser, obwohl dieses Wasser zweifellos eine deutliche andere Zusammensetzung aufweist.

Beispiel 3

Bei den Untersuchungen nach den Beispielen 1 und 2 war aufgefallen, daß die Behandlung mit dem sauer aktivierten Tonmineral A den pH-Wert der behandelten Probe von Ausgangswerten von 6,0 in

5

beiden Fällen auf 3,8 (Beispiel 1) bzw. 4,2 (Beispiel 2) verschob. Dies ist angesichts der stark sauren Natur des Adsorptionsmittels (Tabelle I) nicht verwunderlich. Die anderen, zum Vergleich herangezogenen Adsorptionsmittel verschieben dagegen den pH-Wert in beiden Beispielen auf Werte über 7. Der Verdacht liegt nahe, daß die ausgezeichnete Wirkung des sauer aktivierten Tonminerals durch diese pH-Verschiebung bedingt ist und in ähnlicher Weise durch Kombination einer Säure mit einem anderen Adsorptionsmittel auch zu erreichen wäre. Zur Überprüfung dieser Annahme wurden an einem anderen Papierfabrikskreislaufwasser Untersuchungen mit allen 4 in Tabelle I aufgeführten sauer aktivierten Tonmineralen durchgeführt. Die Untersuchungen wurden in der gleichen Art wie in Beispiel 1 und 2 ausgeführt. Die Ergebnisse sind in Tabelle V wiedergegeben.

Tabelle V

Adsorption organischer Stoffe aus Papierfabrikskreislaufwasser unter Berücksichtigung des pH-Werts

| Adsorptionsmittel | pH | gesamter organischer Kolenstoffgehalt TOC | |
| | | mg C/Liter | Abnahme % |
| --- | --- | --- | --- |
| unbehandelt | 6,1 | 220 | — |
| sauer aktiv. Tonmineral A | 4,0 | 140 | 36 |
| sauer aktiv. Tonmineral B | 7,2 | 150 | 32 |
| sauer aktiv. Tonmineral C | 7,4 | 150 | 32 |
| sauer aktiv. Tonmineral D | 4,1 | 145 | 34 |
| Chrysotil-Asbest | 7,3 | 165 | 25 |
| Aluminiumoxid II | 7,3 | 195 | 11 |

Die Ergebnisse zeigen eindeutig, daß die Wirkung des sauer aktivierten Tonminerals nicht auf eine pH-Wert-Verschiebung zurückzuführen ist, da die zwar sauer aktivierten, jedoch bei späterer Weiterverarbeitung neutralisierten Produkte B und C praktisch die gleiche Wirkung ergaben.

Beispiel 4

Es war zu prüfen, inwieweit die sauer aktivierten Tonminerale tatsächlich anionische organische Stoffe aufnehmen, die besonders störend bei der Papierherstellung sind.

Die Bestimmung der anionischen Stoffe erfolgte durch TOC-Messung vor und nach einer Behandlung des Wassers mit einer anionenaustauschfähigen Cellulose. Die Differenz ($\Delta$TOC) ergibt den C-Gehalt der im Wasser enthaltenen Menge an anionischen organischen Stoffen an. Die Ergebnisse sind in Tabelle VI wiedergegeben.

Tabelle VI

Adsorption anionischer organischer Stoffe aus Kreislaufwasser der Holzschleiferei

| Adsorptionsmittel | pH | gesamter organischer Kohlenstoffgehalt, TOC | | anionische organische Stoffe, gemessen am Kohlenstoffgehalt, $\Delta$ TOC | |
| | | mg C/Liter | Abnahme % | mg C/Liter | Abnahme % |
| --- | --- | --- | --- | --- | --- |
| unbehandelt | 7,7 | 515 | — | 260 | — |
| sauer aktiv. Tonmineral A | 5,5 | 310 | 40 | 125 | 52 |
| sauer aktiv. Tonmineral B | 7,6 | 330 | 36 | 145 | 44 |
| Chrysotil-Asbest | 7,9 | 425 | 18 | 225 | 14 |
| Aluminiumoxid I | 7,9 | 440 | 15 | 230 | 12 |
| Aluminiumoxid II | 7,6 | 420 | 19 | 240 | 8 |

Es zeigt sich, daß überraschenderweise die sauer aktivierten Tonminerale nicht nur anionische Stoffe aufnehmen, sondern diese sogar in weit stärkerem Maße aufnehmen als die positiv geladenen Adsorptionsmittel.

Erfindungsgemäß können also Fabrikationskreislaufwässer oder Abwässer der papiererzeugenden Industrie und verwandter Industriezweige sowie Abwässer ähnlicher Zusammensetzung durch Zusatz von sauer aktivierten Tonmineralen von störenden organischen Stoffen befreit werden. Die erfindungsgemäße Behandlung kann nach der nachstehend angegebenen Maßnahme erfolgen :

Behandlung des bei der Produktion freigesetzten Wassers, welches als Kreislaufwasser zurückgeführt oder als Abwasser abgeleitet wird, mit dem Adsorptionsmittel. Die Behandlung erfolgt dabei vorzugsweise in einem kontinuierlichen Filtrationsprozeß, bei dem ein zusätzlicher Behandlungsschritt zur Abscheidung des beladenen Adsorptionsmittels entfällt. Das beladene Adsorptionsmittel kann dem erzeugten Produkt oder einem anderen, im gleichen oder einem benachbarten Betrieb erzeugten Produkt als Füllstoff zugesetzt werden.

Das Verfahren ist dabei charakterisiert durch äußerst einfache technische Durchführbarkeit, geringen Aufwand an technischen Hilfsmitteln zur Ausführung und umweltfreundliches Behandlungsverfahren ohne Anfall fester Abfallstoffe und frei von sonstigen umweltbeeinträchtigenden Emissionen.

## Ansprüche

1. Verfahren zur Behandlung von Fabrikationskreislauf- und Abwässern der papiererzeugenden und verwandter Industrien zwecks Entfernung von gelösten oder kolloidal dispergierten organischen Stoffen, dadurch gekennzeichnet, daß man ein sauer aktiviertes Tonmineral einsetzt, dessen Alkali- bzw. Erdalkalianteil praktisch vollständig und dessen Aluminiumanteil zum großen Teil aus dem Mineral herausgelöst sind.

2. Verfahren nach Anspruch 1, dadurch gekennzeichnet, daß man ein sauer. aktiviertes Tonmineral des Montmorillonittyps einsetzt.

3. Verfahren nach Anspruch 1 oder 2, dadurch gekennzeichnet, daß man das bei der Behandlung des Fabrikationskreislauf- oder Abwassers anfallende beladene Mittel als Füllstoff wiederverwendet.

## Claims

1. Method for the treatment of factory circulation water and waste waters of the paper-making and related industries for the purpose of removing dissolved or colloidally dispersed organic substances, characterised in that an acid activated clay mineral is used, of which the alkali or alkaline earth portion in dissolved practically completely out of the mineral and of which the aluminium portion is for the most part dissolved out of the mineral.

2. Method according to Claim 1, characterised in that an acid activated clay mineral of the montmorillonite type is used.

3. Method according to Claim 1 or 2, characterised in that the charged medium obtained during the treatment of the factory circulation water or waste water is reused as a filling material.

## Revendications

1. Procédé de traitement des eaux du circuit de fabrication et des eaux usées d'industries fabriquant et d'industries voisines du papier en vue de l'élimination de substances organiques dispersées par dissolution ou sous forme colloïdale, caractérisé en ce qu'on utilise un minéral argileux activé par un acide, dont la fraction alcaline ou alcalino-terreuse est pratiquement totalement éliminée du minéral et sa fraction d'aluminium en est éliminée pour la plus grande partie.

2. Procédé selon la revendication 1, caractérisé en ce qu'on utilise un minéral argileux activé par un acide du type de la montmorillonite.

3. Procédé selon la revendication 1 ou 2, caractérisé en ce qu'on réutilise l'agent chargé provenant du traitement des eaux du circuit de fabrication ou des eaux usées en tant que charge.